# EUROPEAN PATENT APPLICATION

(11) **EP 4 582 859 A1**
(43) Date of publication of application: **09.07.2025**
(21) Application number: 22966757.1
(22) Date of filing: 29.11.2022
(51) Int. Cl.: G02F 1/133

(54) **BACKLIGHT ASSEMBLY, DISPLAY PANEL AND DISPLAY DEVICE**

(71) Applicant: Boe Technology Group Co., Ltd., Beijing 100015 (CN); BEIJING BOE DISPLAY TECHNOLOGY CO., LTD., Beijing 100176 (CN)
(72) Inventor: SHI, Haijun, Beijing 100176 (CN); QU, Qingshan, Beijing 100176 (CN); WANG, Bochang, Beijing 100176 (CN); FU, Changjia, Beijing 100176 (CN); HAN, Tianyang, Beijing 100176 (CN)
(74) Representative: Klunker IP Patentanwälte PartG mbB
(86) International application number: PCT/CN2022/135004
(87) International publication number: WO 2024/113158

(57) **Abstract**

A backlight assembly, a display panel and a display device. **In** the backlight assembly, a light guide plate is positioned in an operation area, transmits light emitted from a light-emitting element positioned in the operation area, and causes the light to exit from the operation area; a middle frame is positioned on the side of the light guide plate close to the light-emitting element, is arranged along an edge of the light guide plate, and causes part of the light emitted from the light-emitting element to enter a frame area surrounding the operation area; and the middle frame comprises an outer portion and an inner portion. The outer portion is positioned on the side of the light guide plate close to the frame area, and the inner portion is connected to the outer portion and is positioned in a bottom surface range of the light guide plate; the inner portion comprises a transparent upper portion close to the light guide plate; the outer portion comprises an upper portion and a lower portion, which are arranged in a vertical direction and are connected to each other; the upper portion of the outer portion overlaps the upper portion of the inner portion in a direction parallel to the vertical direction, and the lower portion of the outer portion is located on the side of the upper portion of the inner portion close to the light-emitting element in the vertical direction; and both the upper portion of the outer portion and the lower portion of the outer portion are transparent.

## Description

### TECHNICAL FIELD

The present disclosure relates to a backlight assembly, a display panel and a display device.

### BACKGROUND

Liquid crystal display panels usually have a backlight assembly to provide the light needed for display. This backlight assembly, such as direct backlight or side-entry backlight, often leads to less light entering the edge of the display area of the display panel, resulting in lower brightness of the edge of the display area of the display panel and relatively dark display image. At present, a large-size liquid crystal display panel may be formed by splicing a plurality of small-size sub-display panels, each sub-display panel is provided with a backlight assembly, and the edges of the display areas of two adjacent sub-display panels are respectively located at the two sides of the seam between the two adjacent sub-display panels, so the display brightness on two sides of the seam is low. Moreover, because almost no light enters the seam position, the seam position forms a relatively obvious display dark area.

### SUMMARY

At least one embodiment of the present disclosure provides a backlight assembly, and the backlight assembly includes a working area, a frame area, a light emitting element, a light guide plate and a middle frame. The frame area at least partially surrounds the working area; the light emitting element is located in the working area; the light guide plate is located in the working area and configured to guide light emitted by the light emitting element to exit from the working area; the middle frame is located at a side of the light guide plate close to the light emitting element, arranged along at least a part of an edge of the light guide plate, and configured to enable a part of the light emitted by the light emitting element to enter the frame area, the middle frame includes an outer part and an inner part, and the light guide plate includes a bottom surface facing the light emitting element. The outer part is located at a side of the light guide plate close to the frame area, and the inner part is connected with the outer part, and an orthographic projection of the inner part on a plane where the bottom surface of the light guide plate is located is within the bottom surface of the guide plate. The inner part includes an upper part close to the light guide plate, and the upper part of the inner part is transparent; the outer part includes an upper part and a lower part which are arranged in a vertical direction and connected with each other, orthographic projections of the upper part of the outer part and the upper part of the inner part on a plane parallel to the vertical direction are at least partially overlapped with each other, and the lower part of the outer part is located at a side of the upper part of the inner part close to the light emitting element in the vertical direction; both the upper part of the outer part and at least a part of the lower part of the outer part are transparent.

For example, the backlight assembly provided by at least one embodiment of the present disclosure further comprises a back plate, the back plate comprises a bottom plate substantially parallel to the bottom surface of the light guide plate and a lateral plate which intersects the bottom plate and extends in the vertical direction perpendicular to the bottom surface of the light guide plate, and the light emitting element is arranged on the bottom plate; the lower part of the outer part is located at a side of the lateral plate of the back plate close to the frame area and extends along the lateral plate of the back plate.

For example, in the backlight assembly provided by at least one embodiment of the present disclosure, an entirety of the outer part of the middle frame is transparent.

For example, in the backlight assembly provided by at least one embodiment of the present disclosure, the lower part of the outer part comprises a distal end away from the light guide plate, the distal end is an opaque white light reflective part, and other parts of the outer part except the distal end are transparent.

For example, in the backlight assembly provided by at least one embodiment of the present disclosure, the working area comprises a middle area and an edge area surrounding the middle area; the outer part is located in the edge area of the working area, or, a part of the outer part is located in the edge area of the working area, and another part of the outer part is located in the frame area.

For example, the backlight assembly provided by at least one embodiment of the present disclosure, further comprises a frame, at least partially located in the frame area, surrounding at least a part of the working area, and located at an outer side of the middle frame away from the working area; the frame comprises a transparent part and a supporting part that is opaque, and the transparent part is located at an outer side of the supporting part away from the working area and attached to the supporting part.

For example, in the backlight assembly provided by at least one embodiment of the present disclosure, the transparent part of the frame comprises a vertical part, the vertical part is located in the frame area, surrounding the working area and extending in the vertical direction perpendicular to the bottom surface of the light guide plate; the vertical part of the frame comprises an outer side surface which is away from the working area, and the outer side surface is a flat surface and perpendicular to the bottom surface of the light guide plate.

For example, in the backlight assembly provided by at least one embodiment of the present disclosure, the vertical part of the frame comprises an upper end in the vertical direction, and the transparent part of the frame further comprises a horizontal part, the horizontal part is connected with an upper end of the vertical part of the frame and extending in a horizontal direction parallel to the bottom surface of the light guide plate, at least a part of the horizontal part is located in the frame area and at a side of the light guide plate away from the light emitting element in the vertical direction, and an included angle between a bottom surface of the horizontal part of the frame close to the light guide plate and the outer side surface of the vertical part of the frame is a right angle.

For example, in the backlight assembly provided by at least one embodiment of the present disclosure, a material of the part of the middle frame that is transparent comprises a base material and a diffusing agent dispersed in the base material; the base material is an organic material, the organic material comprises at least one of PC and PMMA, and the diffusing agent comprises at least one of a silicon dioxide diffusing agent and a silicone diffusing agent.

For example, in the backlight assembly provided by at least one embodiment of the present disclosure, a doping concentration of the silicon dioxide diffusing agent in the base material is 0.6%, or a doping concentration of the silicone diffusing agent in the base material is 1%-2%; a haze of the part of the middle frame that is transparent is 50%-65%.

For example, in the backlight assembly provided by at least one embodiment of the present disclosure, the inner part further comprises a lower part which is close to the light emitting element and connected with the upper part of the inner part, the lower part of the inner part is opaque, and a surface of the lower part of the inner part is a white light reflection layer, and a part of the light emitted by the light emitting element is incident on the white light reflection layer, and the white light reflection layer is configured to reflect the light emitted by the light emitting element.

For example, in the backlight assembly provided by at least one embodiment of the present disclosure, the upper part of the inner part comprises a first inclined part, and a plane parallel to the bottom surface of the light guide plate is a horizontal plane, and an extension direction of the first inclined part intersects with the horizontal plane; an included angle between the extension direction of the first inclined part and the horizontal plane is a first included angle, and a range of the first included angle is 35 degrees ~ 65 degrees.

For example, in the backlight assembly provided by at least one embodiment of the present disclosure, a lower end of the inner part of the middle frame is connected with the bottom plate of the back plate to fix the middle frame on the back plate, a direction from the frame area to the working area is a first direction, and a first distance C between the light emitting element that is closest to the middle frame and the lower end of the inner part of the middle frame in the first direction is 25 mm to 50 mm.

For example, in the backlight assembly provided by at least one embodiment of the present disclosure, the first distance decreases as the first included angle decreases.

For example, in the backlight assembly provided by at least one embodiment of the present disclosure, the lower part of the inner part comprises a second inclined part, and the extension direction of the second inclined part comprises a second included angle with the horizontal plane, and the second included angle ranges from 95 degrees to 100 degrees.

For example, in the backlight assembly provided by at least one embodiment of the present disclosure, an included angle between the second inclined part and the horizontal plane and the included angle between the first inclined part and the horizontal plane are the same, and an entirety constituted by the second inclined part and the first inclined part which are in direct connection with each other comprises a flat inclined surface intersecting the horizontal plane.

For example, in the backlight assembly provided by at least one embodiment of the present disclosure, the part of the middle frame that is transparent comprises: a first supporting part and a second supporting part. The first supporting part comprises a first supporting surface, the first supporting surface is configured to support the light guide plate, and a first part of the first supporting surface close to the working area overlaps with the light guide plate in the vertical direction perpendicular to the bottom surface of the light guide plate to support the light guide plate; and the second supporting part is connected with the first supporting part, located at a side of the first supporting part away from the working area, disposed at an interval with the light guide plate, and comprises a second supporting surface the second supporting part is configured to support a display substrate with pixels, and the interval exposes a second part of the first supporting surface away from the working area.

For example, in the backlight assembly provided by at least one embodiment of the present disclosure, a proportion of the first part of the first supporting surface to the first supporting surface is in a range of 35%-65%.

For example, in the backlight assembly provided by at least one embodiment of the present disclosure, a direction from the frame area to the working area is a first direction, a width of the first support surface in the first direction ranges from 2.0 mm to 3 mm, and a width of the interval in the first direction ranges from 0.8 mm to 1.3 mm.

For example, the backlight assembly provided by at least one embodiment of the present disclosure further comprises a light guide plate fixing glue, the light guide plate fixing glue is located between the first supporting surface and the light guide plate to bond the first supporting surface and the light guide plate, wherein a direction from the frame area to the working area is a first direction, and a width of the light guide plate fixing glue in the first direction is less than or equal to a width of the first supporting surface in the first direction.

For example, in the backlight assembly provided by at least one embodiment of the present disclosure, the working area comprises a middle area and an edge area surrounding the middle area; the backlight assembly further comprises a Fresnel lens, the Fresnel lens is located in the frame area and the edge area of the working area, and is located at a side of the light guide plate away from the light emitting element; the Fresnel lens and the frame are made of a same material and constitute a continuous and integral structure.

For example, in the backlight assembly provided by at least one embodiment of the present disclosure, in a case that the transparent part of the frame comprises a horizontal part, the horizontal part of the frame is connected with an upper end of the vertical part of the frame, extends in a horizontal direction parallel to the bottom surface of the light guide plate, and is located at a side of the light guide plate away from the light emitting element in the vertical direction, and an included angle between the bottom surface of the horizontal part of the frame close to the light guide plate and an outer side surface of the vertical part of the frame is a right angle, at least a part of the horizontal part of the frame is configured as the Fresnel lens.

For example, in the backlight assembly provided by at least one embodiment of the present disclosure, the horizontal part of the frame comprises a non-microstructure part away from the working area and a microstructure part close to the working area, and the microstructure part is configured as a Fresnel lens and comprises a plurality of serrations; a direction from the frame area to the working area is a first direction, a length of the microstructure part in the first direction ranges from 5 mm to 10 mm, and a length of the non-microstructure part in the first direction is less than or equal to 1 mm.

For example, in the backlight assembly provided by at least one embodiment of the present disclosure, the plurality of serrations have equal depths in the vertical direction perpendicular to the bottom surface of the light guide plate, and the depths of the plurality of serrations are all less than 0.5 mm.

For example, in the backlight assembly provided by at least one embodiment of the present disclosure, a tooth pitch of the plurality of serrations of the Fresnel lens gradually increases in a direction from the working area to the frame area.

For example, in the backlight assembly provided by at least one embodiment of the present disclosure, a minimum tooth pitch of the plurality of serrations of the Fresnel lens ranges from 0.06 mm to 0.2 mm, and the tooth pitch of the plurality of serrations ranges from 0.05 mm to 1 mm.

For example, the backlight assembly provided by at least one embodiment of the present disclosure further comprises a transparent soft part and a light shielding part. The transparent soft part is located at a side of the Fresnel lens close to the light emitting element and configured to support the Fresnel lens; and the light shielding part is located at a side of the transparent soft part away from the working area and configured to absorb light from a side of the transparent soft part away from the working area.

For example, in the backlight assembly provided by at least one embodiment of the present disclosure, an upper surface of the supporting part, that is opaque, of the frame away from the light emitting element in the vertical direction perpendicular to the bottom surface of the light guide plate is flush with an upper surface of the transparent soft part away from the light emitting element in the vertical direction perpendicular to the bottom surface of the light guide plate and flush with an upper surface of the light shielding part away from the light emitting element in the vertical direction perpendicular to the bottom surface of the light guide plate.

At least one embodiment of the present disclosure further provides a display panel including a backlight assembly provided by at least one embodiment of the present disclosure, and the display substrate is located at a side of the light guide plate away from the light emitting element.

For example, the display panel provided by at least one embodiment of the present disclosure comprises a display surface, the display surface comprises a display area and a non-display area at least partially surrounding the display area, and the display area is located in an orthographic projection of the working area of the backlight assembly on the display surface; the working area comprises a middle area and an edge area surrounding the middle area, and the backlight assembly is configured to enable light emitted by the light emitting element to enter the display area and enter the edge area and the frame area of the working area; an orthographic projection of the outer part of the middle frame on the display surface is at least partially located in the edge area of the display area; in a case that the backlight assembly comprises a frame, which is at least partially located in the frame area, surrounds at least a part of the working area, and is located at an outer side of the middle frame away from the working area, the frame comprises a transparent part and a supporting part that is opaque, and the transparent part is located at an outer side of the supporting part away from the working area and attached to the supporting part, an orthographic projection of the frame on the display surface is located in the non-display area.

For example, in the display panel provided by at least one embodiment of the present disclosure, one display substrate and one backlight assembly constitute one substrate unit, and the display panel comprises a plurality of substrate units which are spliced with each other, and two adjacent ones of the plurality of display substrates are respectively a first substrate unit and a second substrate unit; in a case that the transparent part of the frame comprises a vertical part, the vertical part of the frame is located in the frame area, surrounds the working area and extends along the vertical direction perpendicular to the bottom surface of the light guide plate, the vertical part of the frame comprises an outer side surface away from the working area, and the outer side surface is a flat surface and perpendicular to the bottom surface of the light guide plate, the outer side surface of the frame of the first substrate unit and the outer side surface of the frame of the second substrate unit are attached to each other, and no gap is between the outer side surface of the frame of the first substrate unit and the outer side surface of the frame of the second substrate unit.

For example, in the display panel provided by at least one embodiment of the present disclosure, the display substrate comprises a black matrix defining a plurality of sub-pixels; the black matrix comprises an edge black matrix farthest from the display area, and an orthographic projection of the edge black matrix on a plane where the display surface is located and an orthographic projection of the second supporting part of the middle frame on the plane where the display surface is located are at least partially overlapped with each other; an edge of the edge black matrix close to the display area is aligned with an edge of the second supporting part of the middle frame close to the display area, or an edge of the edge black matrix close to the display area is not aligned with an edge of the second supporting part of the middle frame close to the display area.

For example, in the display panel provided by at least one embodiment of the present disclosure, an entirety constituted by the Fresnel lens, the transparent soft part and the light shielding part is stacked at a side of the display substrate away from the light emitting element, and all the Fresnel lens, the transparent soft part and the light shielding part extend along an edge of the display area and cover the edge area of the display area; the display panel also comprises a transparent filling part, the transparent filling part is filled between the display substrate and the supporting part that is opaque, and supports the entirety constituted by the Fresnel lens, the transparent soft part and the light shielding part.

For example, in the display panel provided by at least one embodiment of the present disclosure, the light guide plate covers an entirety of a lower surface of the display substrate opposite to the display surface.

At least one embodiment of the present disclosure further provides a display device, and the display device includes the display panel provided by at least one embodiment of the present disclosure.

### BRIEF DESCRIPTION OF DRAWINGS

In order to illustrate the technical solutions of the embodiments of the present disclosure clearer, the drawings of the embodiments will be briefly described. Obviously, the drawings in the following only relate to some embodiments of the present disclosure, and are not intended to limit the present disclosure.
FIG. 1 is a schematic planar view of a display panel provided by an embodiment of the present disclosure, which includes a backlight assembly provided by an embodiment of the present disclosure;
FIG. 2A is a schematic cross-sectional view taken along a line A-A' in FIG. 1;
FIG. 2B is a schematic diagram of the backlight assembly shown in FIG. 2A adjusting light;
FIG. 2C is an enlarged schematic view of a part O1 including a middle frame, a frame and a light guide plate of the backlight assembly in FIG. 2A;
FIG. 3 is a schematic diagram of another display panel provided by an embodiment of the present disclosure, which includes another backlight assembly provided by an embodiment of the present disclosure;
FIGS. 4A-4B are schematic diagrams showing the influence of setting the distance between the light emitting element and the bottom of the middle frame on light adjustment in a backlight assembly according to an embodiment of the present disclosure;
FIG. 5 is a schematic diagram of a partial assembly including a Fresnel lens in the backlight assembly shown in FIG. 2A;
FIG. 6 is a schematic diagram of the adjustment of light in the non-display area and the edge area of the display area by the Fresnel lens in a spliced display panel adopting a backlight assembly provided by the embodiment of the present disclosure;
FIG. 7A is an effect diagram of the influence of a tooth depth of Fresnel lens on a seam of a spliced display panel;
FIG. 7B is an effect diagram of the influence of a tooth pitch of Fresnel lens on a seam of the spliced display panel;
FIG. 7C is an effect diagram of the influence of a focal length of Fresnel lens on a seam of the spliced display panel;
FIG. 8A is a schematic diagram of yet another display panel provided by an embodiment of the present disclosure, which includes yet another backlight assembly provided by an embodiment of the present disclosure;
FIG. 8B is an enlarged schematic view of a part O2 including a middle frame, a frame and a light guide plate of the backlight assembly in FIG. 8A;
FIG. 9 is a schematic planar view of a spliced display panel provided by an embodiment of the present disclosure;
FIG. 10 is a schematic cross-sectional view of the display panel shown in FIG. 9 including a seam S1;
FIG. 11 is a schematic diagram of the positional relationship between an edge black matrix and a middle frame in a display panel according to an embodiment of the present disclosure;
FIG. 12 is a schematic diagram for comparing the display effect of a display panel with another display panel at the seam position according to an embodiment of the present disclosure; and
FIG. 13 is a schematic diagram of a display device provided by an embodiment of the present disclosure.

### DETAILED DESCRIPTION

In order to make the purpose, technical scheme and advantages of the embodiment of the disclosure clearer, the technical scheme of the embodiment of the disclosure will be described clearly and completely with the attached drawings. Obviously, the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Unless otherwise defined, technical terms or scientific terms used in the present disclosure shall have their ordinary meanings as understood by people with ordinary skills in the field to which the present disclosure belongs. The terms "first", "second" and the like used in the present disclosure do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect. "On", "under", "left" and "right" are only used to indicate the relative positional relationship. When the absolute position of the described object changes, the relative positional relationship may also change accordingly.

At least one embodiment of the present disclosure provides a backlight assembly, and the backlight assembly includes a working area, a frame area, a light emitting element, a light guide plate and a middle frame. The frame area at least partially surrounds the working area; the light emitting element is located in the working area; the light guide plate is located in the working area and configured to guide light emitted by the light emitting element to exit from the working area; the middle frame is located at a side of the light guide plate close to the light emitting element, arranged along at least a part of an edge of the light guide plate, and configured to enable a part of the light emitted by the light emitting element to enter the frame area, the middle frame includes an outer part and an inner part, and the light guide plate includes a bottom surface facing the light emitting element. The outer part is located at a side of the light guide plate close to the frame area, and the inner part is connected with the outer part, and an orthographic projection of the inner part on a plane where the bottom surface of the light guide plate is located is within the bottom surface of the guide plate. The inner part includes an upper part close to the light guide plate, and the upper part of the inner part is transparent; the outer part includes an upper part and a lower part which are arranged in a vertical direction and connected with each other, orthographic projections of the upper part of the outer part and the upper part of the inner part on a plane parallel to the vertical direction are at least partially overlapped with each other, and the lower part of the outer part is located at a side of the upper part of the inner part close to the light emitting element in the vertical direction; both the upper part of the outer part and at least a part of the lower part of the outer part are transparent.

At least one embodiment of the present disclosure further provides a display panel including a backlight assembly provided by at least one embodiment of the present disclosure, and the display substrate is located at a side of the light guide plate away from the light emitting element.

At least one embodiment of the present disclosure further provides a display device, and the display device includes the display panel provided by at least one embodiment of the present disclosure.

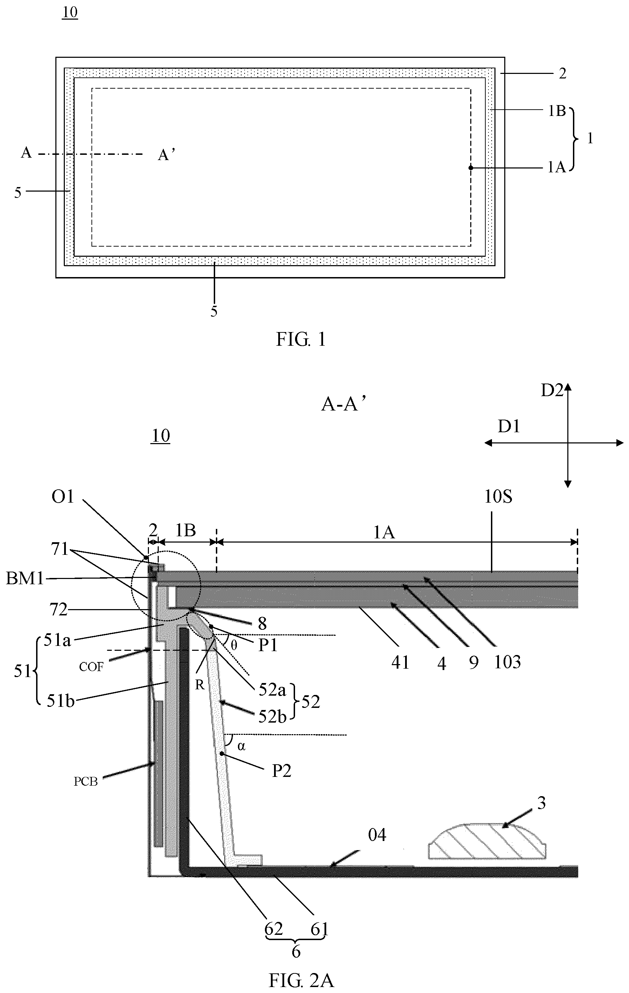

Illustratively, FIG. 1 is a schematic planar view of a display panel 10 provided by an embodiment of the present disclosure, which includes a backlight assembly provided by an embodiment of the present disclosure, and FIG. 2A is a schematic cross-sectional view taken along a line A-A' in FIG. 1. Referring to FIGS. 1 and 2A, a backlight assembly provided by at least one embodiment of the present disclosure includes a working area 1 and a frame area 2, a light emitting element 3, a light guide plate 4 and a middle frame 5. The frame area 2 at least partially surrounds the working area 1; the light emitting element 3 is located in the working area 1; the light guide plate 4 is located in the working area 1 and configured to guide the light emitted by the light emitting element 3 to exit from the working area 1; the middle frame 5 is located at a side of the light guide plate 4 close to the light emitting element 3, arranged along at least a part of the edge of the light guide plate 4, and configured to enable a part of the light emitted by the light emitting element 3 to enter the frame area 2. The middle frame 5 includes an outer part 51 and an inner part 52, the outer part 51 is located at a side of the light guide plate 4 close to the frame area 2, and the inner part 52 is connected with the outer part 51, and an orthographic projection of the inner part 52 on a plane where a bottom surface 41 of the light guide plate 4 is located is located in the bottom surface 41 of the light guide plate 4. The inner part 52 includes an upper part 52a close to the light guide plate 4, and the upper part 52a of the inner part 52 is transparent; the outer part 51 includes an upper part 51a and a lower part 51b which are arranged in a vertical direction and connected with each other. Orthographic projections of the upper part 51a of the outer part 51 and the upper part 52a of the inner part 52 on a plane parallel to the vertical direction D2 are at least partially overlapped with each other, and the lower part 51b of the outer part 51 is located at a side of the upper part 52a of the inner part 52 close to the light emitting element 3 in the vertical direction D2. The upper part 51a of the outer part 51 and at least a part of the lower part 51b of the outer part 51 are transparent. The working area 1 includes a middle area 1A and an edge area 1B surrounding the middle area 1A. The working area 1 is a light exiting area, and the edge area 1B is a part of the working area 1 close to the edge of the working area 1, which is an area close to the edge of the working area 1.

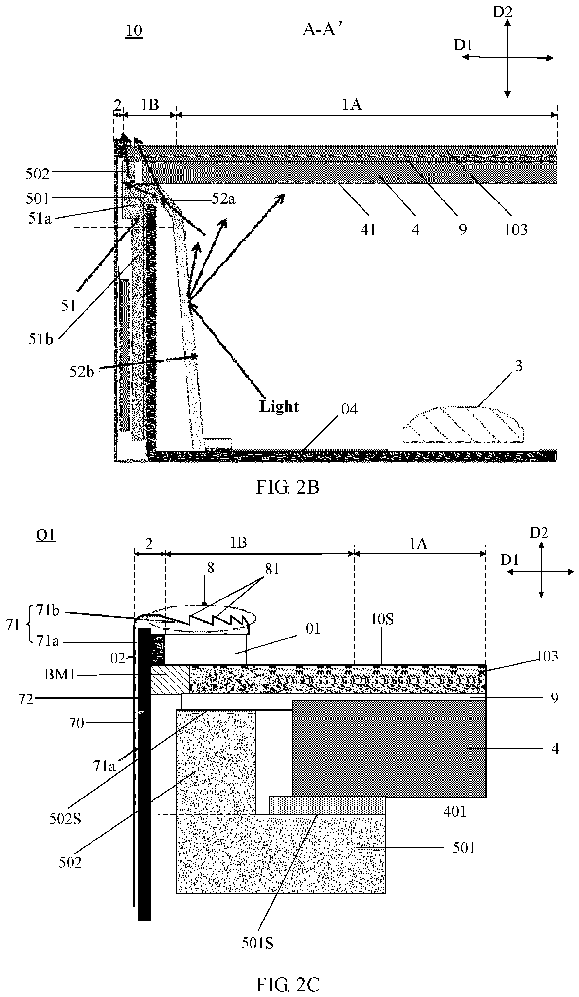

Generally, in a display panel using a backlight assembly, the brightness of the edge area 1B of the working area 1 is relatively low, so that the display brightness of the display area corresponding to the edge area 1B is relatively low, resulting in uneven display brightness of the display panel and affecting the display effect. Especially, in a spliced display panel formed by splicing a plurality of sub-display panels, each sub-display panel includes a backlight assembly, and there is a seam area between adjacent sub-display panels, that is, a boundary area of adjacent sub-display panels, the seam area corresponds to the frame areas and the edge areas of the working areas of two sub-display panels on both sides of the seam. Therefore, the relatively low display brightness of the frame areas and the edge areas of the working areas will lead to the formation of a dark area in the seam area, and users can see an obvious seam, which will affect the display uniformity of the spliced display panel. FIG. 2B is a schematic diagram of the backlight assembly shown in FIG. 2A adjusting light. Referring to FIG. 2B, in the display panel 10 adopting the backlight assembly provided by the embodiment of the present disclosure, because the upper part 52a of the inner part 52 is transparent, a part of the light emitted by the light emitting element 3 can reach the edge area 1B through the upper part 52a of the inner part 52; moreover, because the upper part 51a of the outer part 51 is transparent, a part of the light emitted by the light emitting element 3 can be further transmitted to the edge area 1B through the upper part 51a of the outer part 51 after passing through the upper part 52a of the inner part 52, and the light entering the edge area 1B can be further diffused from the edge area 1B to the frame area 2. Therefore, the feature that the upper part 52a of the inner part 52 is transparent, combined with the feature that the upper part 51a of the outer part 51 and at least a part of the lower part 51b of the outer part 51 are transparent, can increase the amount of light reaching the edge area 1B and the frame area 2, and ameliorate the phenomenon that the seam area is a dark area in the above-mentioned spliced display panel.

For example, the inner part 52 further includes a lower part 52b which is close to the light emitting element 3 and connected with the upper part 52a of the inner part 52, the lower part 52b of the inner part 52 is opaque, and the surface of the lower part 52b of the inner part 52 is a white light reflection layer. Referring to FIG. 2B, a part of the light emitted by the light emitting element 3 is incident on the white light reflection layer on the lower part 52b of the inner part 52, and the white light reflection layer is configured to reflect this part of the light emitted by the light emitting element 3 to the bottom surface 41 of the light guide plate 4, so that this part of the light passes through the light guide plate 4 and is emitted from the display area of the display panel 10, thereby improving the light utilization rate and ensuring the display brightness.

For example, the reflectance of the white light reflection layer is above 85%, and the diffuse reflectance is above 80%, so that the white light reflection layer mainly reflects the light emitted by the light emitting element 3 to the middle area of the working area and exits from the middle area of the display area of the display panel 10, thereby avoiding the overall brightness shortage in the middle area of the display area and improving the light utilization rate.

For example, the light emitting element 3 is located at least in the middle area 1A; for example, the light emitting element 3 is located in the center of the working area 1, for example, in the geometric center of the working area 1. For example, the backlight assembly 10 includes a plurality of light emitting elements 3, and the plurality of light emitting elements 3 are located in the middle area 1A, for example, the plurality of light emitting elements 3 are distributed in an array. For example, the light emitting element 3 is an organic light emitting diode or an inorganic light emitting diode. Of course, the type and specific position of the light emitting element 3 are not limited in the present disclosure.

For example, the light guide plate 4 is located in the entire working area 1 and the entire working area 1 is provided with the light guide plate 4, that is, the area where the light guide plate 4 is located and the working area 1 are equal to each other, that is, an orthographic projection of the light guide plate 4 on a plane parallel to a light emitting surface of the light guide plate 4 coincides with an orthographic projection of the working area 1 on the plane parallel to the light emitting surface. Alternatively, the orthographic projection of the light guide plate 4 on the plane parallel to the light emitting surface of the light guide plate 4 is located in the orthographic projection of the working area 1 on the plane parallel to the light emitting surface, and the area of the orthographic projection of the light guide plate 4 is smaller than the area of the orthographic projection of the working area 1.

For example, the light guide plate 4 is configured to homogenize or diffuse light from the light emitting element 3; the light guide plate may not only be an integral plate structure, for example, the light guide plate may also include a diffusion film, or the light guide plate may be a diffusion film, for example, the diffusion film includes scattering particles to homogenize or diffuse the light from the light emitting element 3. A light guide structure 5 is located at a side of the light guide plate 4 close to the light emitting element 3 and arranged along at least a part of the edge of the light guide plate 4, and the light guide structure 5 is configured to enable a part of the light emitted by the light emitting element 3 to enter the edge area 1B.

For example, referring to FIG. 2A, the backlight assembly provided by the embodiment of the present disclosure further includes a back plate 6, which includes a bottom plate 61 substantially parallel to a bottom surface 41 of the light guide plate 4 and a lateral plate 62 intersecting with the bottom plate 61 and extending in a vertical direction D2 perpendicular to the bottom surface 41 of the light guide plate 4, and the light emitting element 3 is arranged on the bottom plate 61; the lower part 51b of the outer part 51 is located at a side of the lateral plate 62 of the back plate 6 close to the frame area 2 and extends along the lateral plate 62 of the back plate 6.

The inner part 52 of the middle frame 5 is fixed to the bottom plate 61, and the fixing method can be a snap-fit connection or a screw connection, etc. The embodiment of the present disclosure is not limited thereto specific fixing method as long as the inner part 52 of the middle frame 5 can be fixed to the bottom plate 61. The back plate 6 is, for example, a metal plate. For example, the bottom plate 61 and the lateral plate 62 form an integrated structure. The thickness of the bottom plate 61 is, for example, 1.2 mm to 2 mm. Of course, the thickness of the bottom plate 61 is not limited in the present embodiment, and the thickness of the bottom plate can be designed according to the actual needs of different backlight assemblies.

For example, in the embodiment shown in FIG. 2A, the entirety of the lower part 51b of the outer part 51 is transparent, that is, the entirety of the outer part 51 of the middle frame 5 is transparent, so that there is no light shielding part in the part of the middle frame 5 outside the light guide plate 4, so as to maximize the light transmittance of the edge area 1B, thus achieving the ideal technical effect of reducing the physical seam of the spliced display panel, thus not only visually weakening the presence of the seam, but also reducing the width of the actual seam, achieving the ideal technical effect of weakening the physical seam of the spliced display panel.

Of course, in other embodiments, the part of the lower part 51b of the outer part 51 close to the upper part 51a of the outer part 51 may be transparent, while the part of the lower part 51b of the outer part 51 away from the upper part 51a of the outer part 51 is an opaque reflective part, such as a white light reflective part, which is configured to reflect a part of the light incident on the reflective part passing through the transparent part of the outer part 51 to the frame area 2 or the edge area 1B of the working area. That is, the lower part 51b of the outer part 51 includes a distal end away from the light guide plate 4 in the vertical direction D2 perpendicular to the bottom surface 41 of the light guide plate 4, the distal end is an opaque white light reflective part, and other parts of the outer part 51 except the distal end are transparent. In this way, while reducing the physical seam, the distal end is a white light reflective part to reflect the light incident on the transparent part of the outer part 51 toward the light emitting surface of the display panel 10, thereby improving the light emitting rate.

For example, the outer part 51 of the middle frame 5 is completely located in the edge area 1B of the working area 1, or a part of the outer part 51 of the middle frame 5 is located in the edge area 1B of the working area 1, and another part of the outer part 51 of the middle frame 5 is located in the frame area 2. The boundary between the frame area 2 and the edge area 1B is an edge black matrix (described below) located at the edge of the working area (that is, the edge of the light exiting area). Because the edge black matrix is opaque, the edge black matrix blocks light from directly passing through it to the area directly above the black matrix. Therefore, in the backlight assembly, the area where the edge black matrix is located and the area located at a side of the edge black matrix away from the working area serve as the frame area 2, but the frame area is not completely light-free. The backlight assembly provided by the embodiment of the present disclosure can transmit light to the edge area 1B and the vicinity of the frame area through the upper part 51a of the transparent inner part 51 of the middle frame 5 and the transparent outer part 51 of the middle frame 5, and the light can also be diffused to the frame area 2, so that, in a spliced display panel using the backlight assembly, not only the brightness of the edge area 1B can be improved, but also the brightness of the frame area 2 and the brightness of the seam area can be improved, so that the seam is not obvious in display effect.

Referring to FIG. 2A, for example, the backlight assembly provided by at least one embodiment of the present disclosure further includes a frame 7, which is at least partially located in the frame area 2, surrounds at least a part of the working area 1, and is located outside the middle frame 5 away from the working area 1. The frame 7 includes a transparent part 71 and a supporting part 72 that is opaque, and the transparent part 71 is located outside the supporting part 72 away from the working area 1 and attached to the supporting part 72. For example, the entirety of the frame 7 is transparent, so as to reduce the width of the physical seam of the spliced display panel using the display panel 10 including the backlight assembly.

FIG. 2C is an enlarged schematic view of a part O1 including the middle frame 5, the frame 7 and the light guide plate 4 of the backlight assembly in FIG. 2A. Referring to FIG. 2A and FIG. 2C, for example, the transparent part 71 of the frame 7 includes a vertical part 71a (as shown in FIG. 2C), the vertical part 71a is located in the frame area 2, surrounds the working area 1 and extends in a vertical direction D2 perpendicular to the bottom surface 41 of the light guide plate 4. The vertical part 71a of the frame 7 includes an outer side surface 70 away from the working area 1, and the outer side surface 70 is a flat surface and perpendicular to the bottom surface 41 of the light guide plate 4, so that the outer side surfaces of the frames 7 of two adjacent substrates spliced with each other can be attached to each other, thereby reducing the width of the seam of the spliced display panel adopting the display panel 10 including the backlight module.

Referring to FIGS. 2A and 2C, for example, the vertical part 71a of the frame 7 has an upper end in the vertical direction D2, and the transparent part 71 of the frame 7 further includes a horizontal part 71b (as shown in FIG. 2C), the transparent horizontal part 71b is connected with the upper end of the vertical part 71a of the frame 7 and extends in the horizontal direction parallel to the bottom surface 41 of the light guide plate 4, at least a part of the horizontal part 71b is located in the frame area and at the side of the light guide plate 4 away from the light emitting element 3 in the vertical direction D2. An included angle between the bottom surface 41 of the horizontal part 71b of the frame 7 close to the light guide plate 4 and the outer side surface 70 of the vertical part 71a of the frame 7 is a right angle, so as to improve the stability of the frame 7, which is beneficial to the reliability that the outer side surfaces of the frames of two adjacent sub-display panels are attached to each other in the case that the display panel 10 with the backlight assembly is used as a sub-display panel for splicing, and is convenient to manufacture and maintain the flatness of the spliced display panel.

Referring to FIG. 2A, the display substrate 103 is connected to the flexible printed circuit board PCB through a flip-chip film COF. After receiving the electric signal from the driving circuit (IC), the flexible printed circuit board PC transmits the electric signal to the display substrate 103 through the flip-chip film COF to drive the display substrate 103 to achieve the display function.

For example, the material of the transparent part of the middle frame 5 includes a base material and a diffusing agent dispersed in the base material; the base material is an organic material, the organic material includes at least one of PC and PMMA, and the diffusing agent includes at least one of silicon dioxide diffusing agent and silicone diffusing agent. The silicon dioxide diffusing agent and silicone diffusing agent have good light diffusing effect, and the materials are easy to obtain and manufacture.

For example, the doping concentration of silicon dioxide diffusing agent in the base material is 0.6%, or the doping concentration of silicone diffusing agent in the base material ranges from 1% to 2%. For example, the haze of the transparent part of the middle frame 5 is ranges from 50% to 65%, and it is verified by experiments that a more uniform diffusion effect can be obtained by combining this haze with the concentration of the diffusion agent, and the best and most uniform display effect can be achieved.

For example, in some embodiments, the upper part 52a of the inner part 52 and the lower part 52b of the inner part 52 are connected by an inserting method, and the materials of the two parts are different, for example, the upper part 52a of the inner part 52 is formed by using a different material through an injection molding process. Alternatively, in some other embodiments, the upper part 52a of the inner part 52 is made of the same material as the lower part 52b of the inner part 52 to form an integrated structure, and then the surface of the lower part 52b of the inner part 52 is covered with a white light reflection layer.

Referring to FIG. 2A, for example, the upper part 52a of the inner part 52 includes a first inclined part P1, and the lower part 52b of the inner part 52 includes a second inclined part P2. A plane parallel to the bottom surface 41 of the light guide plate 4 is a horizontal plane, and the extension direction of the first inclined part P1 intersects with the horizontal plane. An included angle between the extension direction of the first inclined part P1 and the horizontal plane is a first included angle θ, and the first included angle θ ranges from 35° to 50°, so as to ensure that enough light can enter the edge area 1B sequentially through the transparent first inclined part P1 and the upper part 51a of the outer part 51 of the middle frame 5. Through the experimental research, if the first included angle θ is too small, it is obvious that the first included angle θ is less than 35°, in this case, because there is a certain distance between the light emitting element 3 and the inner part of the middle frame 5, this distance should not be too large, so it is difficult to make the included angle (the second included angle α described below) between the extension direction of the second inclined part P2 and the horizontal plane larger than the first included angle θ, a large part of the light emitted by the light emitting element 3 cannot reach the first inclined part P1 and will be blocked by the second inclined part P2, thus reducing the amount of light that finally enters the edge area 1B through the first inclined part P1, which is not conducive to ameliorating the phenomenon that the edge area 1B and the frame area 2 are display dark areas; if the first included angle θ is too large, it is obvious that the first included angle θ is more than 50°, in this case, because the angle is too large, the first inclined part P1 will be close to be vertical, and only the light emitted from the light transmitting part of the middle frame 5 can enter the position 1B, but the light emitted to the first inclined part P1 cannot be incident to the edge area 1B, resulting in insufficient light and darkness in the edge area 1B.

Referring to FIG. 2A, the junction position of the upper part 52a of the inner part 52 and the lower part 52b of the inner part 52 includes a corner R, which is a fillet structure, and the profile shape of the cross section of the fillet structure is, for example, a part of an arc, and the radius of the arc ranges from 3 mm to 5 mm, so as to ensure that the middle frame 5 has sufficient thickness at the corner R and meets the requirements for corner strength.

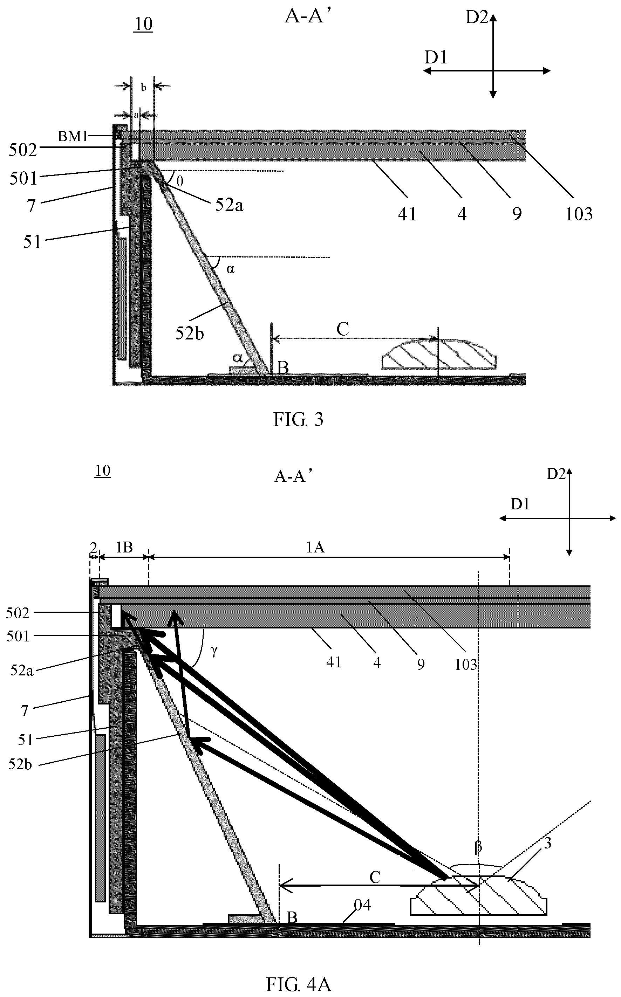

FIGS. 4A-4B are schematic diagrams showing the influence of setting the distance between the light emitting element and the bottom of the middle frame on light adjustment in a backlight assembly according to an embodiment of the present disclosure. Referring to FIG. 4A, for example, the lower end B of the inner part 52 of the middle frame 5 is connected with the bottom plate 61 of the back plate 6 to fix the middle frame 5 on the back plate 6. The direction from the frame area 2 to the working area 1 is the first direction D1, and the first distance C between the light emitting element 3 closest to the middle frame 5 and the lower end of the inner part 52 of the middle frame 5 in the first direction D1 ranges from 25 mm to 40 mm. As shown in FIG. 4A, in the case that the first included angle θ ranges from 35° to 50°, the included angle γ between the light emitted by the light emitting element 3 which is closest to the middle frame 5 to the supporting surface of the light guide plate 4 and the horizontal direction is greater than 25°. The supporting surface of the light guide plate 4 refers to a first supporting surface 501S (described later) of the transparent upper part 52a of the inner part 52, and the light emitting angle β of the light emitting element 3 closest to the middle frame 5 is 75°, in this case, most of the light emitted from the light emitting element 3 closest to the middle frame 5 can irradiate on the supporting surface of the light guide plate, so as to ensure that enough light can be incident to the edge region 1B. For example, the light emitting angle β of the light emitting element 3 is 75°, upon the light emitting angle β being greater than 75°, the light power of the light emitting element 3 drops rapidly; the case that the angle is less than 25° needs to correspond to the case that the light emitting angle of the light emitting element 3 is greater than 75°, but in this case, the light power of the light emitting element 3 decreases, resulting in insufficient light emission, resulting in low brightness of the display panel 10.

The light emitting angle β is an included angle between the outermost rays in one direction dimension among the rays emitted by one light emitting site of the light emitting element 3 upon the light intensity emitted by the light emitting element 3 being half of the maximum light intensity of the light emitting element 3. For example, in FIG. 4A, the included angle between the leftmost ray and the rightmost ray among the rays emitted by the central light emitting site of the light emitting element 3 is taken as an example of the light emitting angle β.

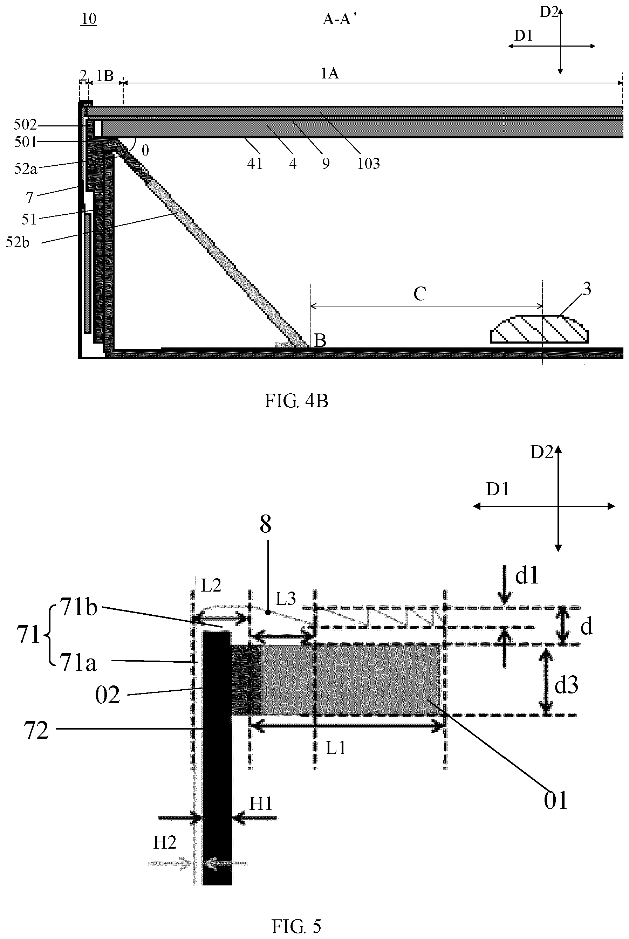

However, referring to FIG. 4B, in the case that the angle θ > 50°, the distance between the bottom of the middle frame 5 and the edge of the backlight assembly away from the working area in the first direction D1 (that is, the edge of the frame away from the working area in the first direction D1) is more than 45 mm. In this case, the included angle between the connection line between the light emitting element 3 closest to the middle frame 5 and the supporting surface of the light guide plate 4 and the horizontal direction is less than 25°, while the light emitting angle of the light emitting element 3 closest to the middle frame 5 is 75°. Thus, only a small part of the light emitted from the light emitting element 3 closest to the middle frame 5 can irradiate on the supporting surface of the light guide plate 4.

For example, within the range of the first included angle θ, in order to ensure that enough light can enter the edge area 1B and avoid that the light emitted by the light emitting element 3 closest to the middle frame 5 cannot reach the transparent upper part 52a of the inner part 52 of the middle frame 5 or cannot reach because the first distance C is too small or the first included angle θ is too small, and the first distance C decreases as the first included angle θ decreases.

For example, among a plurality of light emitting elements 3 arranged in an array, edge light emitting elements 3 close to the frame and middle light emitting elements 3 located in the middle area of the array are arranged at unequal intervals, and the light emitting elements in 2-3 columns of the edge are arranged more densely than the light emitting elements in the middle columns, so as to ameliorate the problem that the brightness of the edge is relatively low caused by the middle frame 5 and improve the brightness uniformity of the display module.

Referring to FIG. 2A, for example, a second included angle α is formed between the extension direction of the second inclined part P2 and the horizontal plane, the second included angle α is greater than the first included angle θ, for example, the range of the second included angle α is 80°-85°, so as to ensure that the opaque lower part 52b of the inner part 52 of the middle frame 5 has a proper inclination and reflects light as much as possible.

For example, the upper end of the second inclined part P2 is connected with the first inclined part P1, and the lower end of the second inclined part P2 is connected with the horizontal part 61 of the back plate 6, and the complementary angle of the second included angle α is the included angle between the second inclined part P2 and the surface of the horizontal part 61 of the back plate 6 where the light emitting element 3 is arranged, and accordingly, the complementary angle of the second included angle α ranges from 95° to 100°.

FIG. 3 is a schematic diagram of another display panel provided by an embodiment of the present disclosure, which includes another backlight assembly provided by an embodiment of the present disclosure. For example, referring to FIG. 3, in another embodiment, the included angle between the second inclined part P2 and the horizontal plane and the included angle between the first inclined part P1 and the horizontal plane are the same, that is, the first included angle θ is equal to the second included angle α, and the entirety constituted by the second inclined part P2 and the first inclined part P1 which are in direct contact includes a flat inclined surface intersecting the horizontal plane. The embodiment shown in FIG. 3 can also achieve the same or similar technical effects as the embodiment shown in FIG. 2A. Other structures and technical effects of the embodiment shown in FIG. 3 are the same as those shown in FIG. 2A, and reference can be made to the description of the embodiment shown in FIG. 2A.

Referring to FIG. 2C, for example, the transparent part of the middle frame 5 includes a first supporting part 501 and a second supporting part 502. The first supporting part 501 includes a first supporting surface 501S configured to support the light guide plate 4, and a first part of the first supporting surface 501S close to the working area 1 overlaps with the light guide plate 4 in a vertical direction D2 perpendicular to the bottom surface 41 of the light guide plate 4 to support the light guide plate 4; the second supporting part 502 is connected with the first supporting part 501, located at the side of the first supporting part 501 away from the working area 1 in the first direction D1, disposed at an interval with the light guide plate 4, and includes a second supporting surface 502S; for example, the first support surface 501S is the upper surface of the first supporting part 501 away from the light emitting element in the vertical direction D2, and the second support surface 502S is the upper surface of the second supporting part 502 away from the light emitting element in the vertical direction D2, and the height of the second support surface 502S in the vertical direction D2 is greater than the height of the first support surface 501S in the vertical direction D2. The second supporting part 502 is configured to support the display substrate 103 with pixels, and this interval exposes the second part of the first supporting surface 501S away from the working area 1, that is, the second part of the first supporting surface 501S and the light guide plate 4 are not overlapped with each other in the vertical direction D2 perpendicular to the bottom surface 41 of the light guide plate 4. In this way, the light guide plate 4 is supported and fixed by the first supporting part 501 and the display substrate 103 is supported and fixed by the second supporting part 502, and an expansion space is reserved for the light guide plate 4 and the second supporting part 502 through the interval between the second supporting part 502 and the light guide plate 4. In addition, the first supporting part 501 and the second supporting part 502 are transparent, which will not block the light at this position, and can improve the light transmittance at this position while playing a supporting role, thus solving the problem of low display brightness in the area close to the frame.

Referring to FIG. 2C, for example, the proportion of the first part of the first supporting surface 501S to the first supporting surface 501S is 35%-65%, so that the light guide plate 4 can be effectively prevented from slipping down at low temperature, and the shadow of the display screen of the display panel 10 using the backlight assembly provided by the embodiment of the present disclosure due to excessive overlapping area between the light guide plate 4 and the first supporting part 501 can be avoided.

Referring to FIG. 2C, for example, the width of the first supporting surface 501S in the first direction D1 ranges from 2.0 mm to 3 mm, and the width of the interval between the second supporting part 502 and the light guide plate 4 in the first direction D1 ranges from 0.8 mm to 1.3 mm, so as to prevent the light guide plate 4 from slipping down at low temperature and avoid the shadow of the display screen of the display panel caused by excessive overlapping area between the light guide plate 4 and the first supporting part 501. For example, the width of the first part of the first supporting surface 501S in the first direction D1 ranges from 0.7 mm to 1.3 mm, so as to ensure that the first supporting surface 501S can adequately support and fix the light guide plate 4.

Referring to FIG. 2C, for example, the backlight assembly provided by at least one embodiment of the present disclosure further includes a light guide plate fixing glue 401, which is located between the first support surface 501S and the light guide plate 4 to bond the first support surface 501S and the light guide plate 4, and the width of the light guide plate fixing glue 401 in the first direction D1 is less than or equal to the width of the first support surface 501S in the first direction D1. Because the backlight assembly is assembled by attaching the light guide plate fixing glue 401 first, and then installing the light guide plate 4, the thickness of the light guide plate fixing glue 401 is very thin, for example, only 0.1 mm. If the light guide plate fixing glue 401 exceeds the first supporting surface 501S in the first direction D1, the part of the light guide plate fixing glue 401 that exceeds the first supporting surface 501S will overlap the sidewall of the middle frame 5, which will affect the image quality of the display area corresponding to the area close to the middle frame 5.

For example, the light guide plate fixing glue 401 is transparent double-sided tape, with a light transmittance of over 90% and an adhesive force of over 1300kgf.

For example, the material of the light guide plate 4 is a plate made of PS or PC, and the light guide plate 4 is doped with a diffusing agent, which can be a silicone diffusing agent with a concentration of 3%~5% or other equivalent diffusing agents; the haze of the light guide plate 4 is above 90%, the transmittance of the light guide plate 4 ranges from 40% to 60%, and the thickness of the light guide plate 4 ranges from 1.5 mm to 2.5 mm. If the light guide plate 4 is too thin, its support strength is insufficient, and it is easy to collapse and cause lamp shadow. If the light guide plate 4 is too thick, it will affect the passage of light and the utilization rate of light.

Referring to FIGS. 2A and 2C, for example, the working area 1 includes a middle area 1A and an edge area 1B surrounding the middle area 1A; the backlight assembly further includes a Fresnel lens 8, and the Fresnel lens 8 is located at the frame area 2 and the edge area of the working area 1 and at a side of the light guide plate 4 away from the light emitting element 3. The Fresnel lens 8 is made of the same material as the frame 7 and constitutes an integral structure with the frame 7. The Fresnel lens 8 can converge the light in the frame area 2 and the edge area of the working area 1, improve the brightness of the edge areas of the frame area 2 and the working area 1, and reduce the presence of the seams of the spliced display panel. Moreover, the Fresnel lens 8 is made of the same material as the frame 7 and constitutes an integral structure with the frame 7, and the Fresnel lens 8 is directly formed by a part of the frame, so that the structure of the backlight assembly can be simplified, the assembly difficulty can be reduced, and the structural stability of the assembled backlight assembly can be improved.

Referring to FIGS. 2A and 2C, for example, at least a part of the horizontal part 71b of the frame 7 is configured as the Fresnel lens 8, that is, the Fresnel lens 8 is formed by using the horizontal part 71b of the frame 7, which further reduces the assembly difficulty and improves the structural stability of the assembled backlight assembly while simplifying the structure of the backlight assembly.

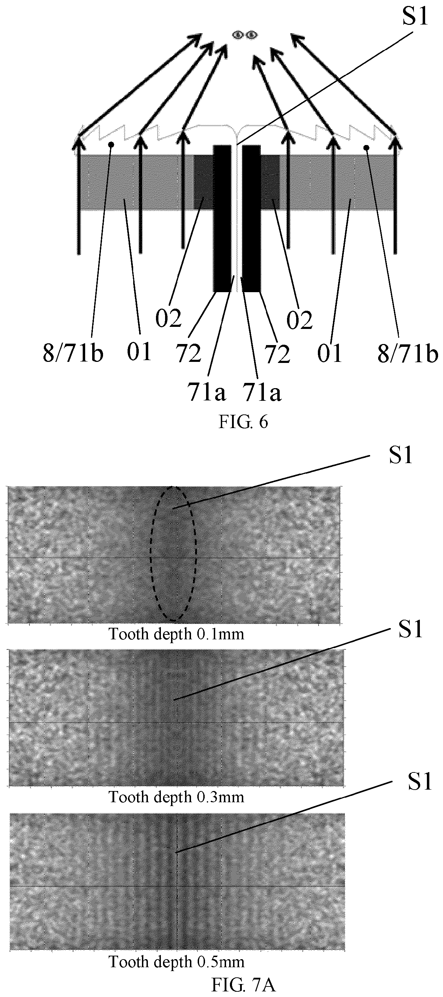

Referring to FIG. 2C, for example, the horizontal part 71b of the frame 7 includes a non-microstructure part away from the working area 1 and a microstructure part close to the working area 1, and the microstructure part is configured as the Fresnel lens 8, and the Fresnel lens 8 includes a plurality of serrations 81. FIG. 5 is a schematic diagram of a partial assembly including a Fresnel lens in the backlight assembly shown in FIG. 2A; FIG. 6 is a schematic diagram of the adjustment of light in the non-display area and the edge area of the display area by the Fresnel lens in a spliced display panel using the backlight assembly provided by the embodiment of the present disclosure. Referring to FIGS. 5-6, FIG. 6 shows two sub-display panels spliced together, and the frame areas of the two sub-display panels close to each other constitute a seam, and the horizontal parts 71b of the two frames 7 on two sides of the seam are basically symmetrical with respect to the symmetry axis extending in the vertical direction D2, so that the two non-microstructure parts and the two microstructure parts on two sides of the seam are symmetrical with each other, respectively, and two adjacent non-microstructure parts are in contact and attached to each other, no interval is provided between them, that is, no air layer and no other parts are provided between them, thus not only reducing the width of the actual physical seam, but also better concentrating the light around the seam, so that this light is visually emitted from the frame area and the edge area of the display area to the user's eyes, so that the visual seam is reduced and the spliced display panel has a more uniform display effect.

Referring to FIG. 5, for example, the length L1 of the microstructure part in the first direction D1 ranges from 5 mm to 10mm, and the length L2 of the non-microstructure part in the first direction D1 is less than or equal to 1 mm. According to the experimental results, the combination of the length of the microstructure part and the length of the non-microstructure part can achieve a better effect of visually reducing the seam. The main function of the non-microstructure part is to connect the microstructure part and to facilitate the close joint of the frame parts of the two panels. The length L2 of the non-microstructure part in the first direction D1 is less than or equal to 1mm, which can avoid the excessive width of the actual physical seam. Of course, the length of the microstructure part in the first direction D1 and the length of the non-microstructure part in the first direction D1 can be determined according to the size of the seam, the larger the seam, the longer the length of the horizontal part 71b of the frame 7. In some backlight assemblies provided by the embodiments of the present disclosure, the lengths of the two parts need not be limited to the above-mentioned size range.

Referring to FIG. 5, for example, the depths d1 of the plurality of serrations 81 in the vertical direction D2 perpendicular to the bottom surface 41 of the light guide plate 4 are equal, so that the refraction degrees of light passing through the plurality of serrations 81 are uniform, and the refraction angles of light passing through the plurality of serrations 81 are equal, and a relatively uniform display effect is obtained. If the depths of the plurality of serrations 81 are unequal, the refraction angles of light passing through the plurality of serrations 81 are inconsistent, which will lead to a strong sense of screen separation of the display panel 10.

For example, the depths d1 of the plurality of serrations 81 are less than 0.5mm, for example, preferably 0.05 mm to 0.5 mm; the greater the design value of the tooth depth, the more serious the serration feeling of the image will be, which will further affect the image quality. Through experimental research, the depths d1 of the serrations 81 are in the range from 0.05mm to 0.5mm, which can achieve a better effect of visually eliminating the seam, and will not make the tooth depth too small, which will lead to too high processing difficulty and difficult to manufacture. FIG. 7A is an effect diagram of the influence of the tooth depth of Fresnel lens on the seam of the spliced display panel. FIG. 7A shows the display effect upon all of the depths d1 of the plurality of serrations 81 are 0.1mm, 0.3mm and 0.5mm under the same other conditions. As can be seen from FIG. 7A, upon the depths d1 of the plurality of serrations 81 being all less than 0.5mm, the seams of the spliced display panel are relatively inconspicuous and the display effect is good. In addition, the relationship between the tooth depth of Fresnel lens and the display effect is explored through experiments, and it is found that upon the depth d1 of a plurality of serrations 81 with the same depth being greater than 0.5mm, the display effect is obviously deteriorated, and the seams are very obvious. Therefore, the depth d1 of the plurality of serrations 81 is less than 0.5mm, which can achieve a better display effect of weakening the seam.

Referring to FIG. 5, for example, the thickness d of the horizontal part 71 of the frame 7 in the vertical direction D2 is in the range from 1.5mm to 3 mm, so as not to make the thickness of the display panel 10 too large under the condition of achieving ideal dimming effect.

Referring to FIG. 5, for example, the tooth pitches of the plurality of serrations 81 of the Fresnel lens 8 gradually increase in the direction from the working area 1 to the frame area 2. For example, the tooth pitch of a serration closest to the frame area 2 is L3, so as to ensure that each serration 81 of the microstructure part concentrates light close to the focus, for example, the focus of the Fresnel lens 8 is located at the position of the seam between two adjacent sub-display panels in FIG. 6. That is, the focus of the Fresnel lens 8 is the position of the interface between the outer side surfaces of the frame 7 of the two sub-display panels that are attached to each other, so as to achieve a better effect of converging light rays to the seam position, so as to improve the brightness at the seam and achieve an ideal technical effect of eliminating the seam.

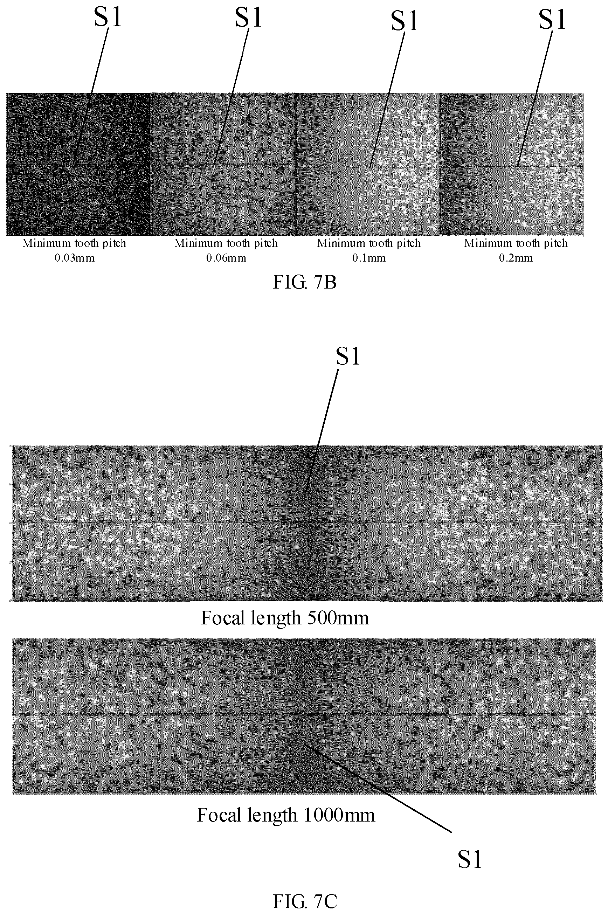

The greater the tooth pitch of Fresnel lens 8, the worse the magnification effect and the less obvious the effect of seam elimination. FIG. 7B is an effect diagram of the influence of the tooth pitch of Fresnel lens on the seam of the spliced display panel, and the "tooth pitch" adopted in the test case in FIG. 7B refers to the smallest tooth pitch among the tooth pitches of a plurality of serrations. Referring to FIG. 7B, upon the minimum tooth pitch being less than 0.06 mm, for example, 0.03mm, the brightness close to the seam S1 is very low, and the picture is obviously dark. Therefore, according to a large number of test results, for example, selecting the range of the minimum tooth pitch is greater than 0.05mm to achieve higher display brightness close to the seam S1, which is beneficial to ameliorate the problem of darkness close to the seam S1. For example, according to a large number of test results, the minimum tooth pitch of Fresnel lens 8 is in the range from 0.06 mm to 0.2 mm, and the tooth pitch of the plurality of serrations 81 is in the range from 0.05mm to 1 mm, so as to achieve high display brightness close to the seam S1, which is beneficial to ameliorate the problem of darkness close to the seam S1. Alternatively, the tooth pitch of the plurality of serrations 81 ranges from 0.5 to 2 times the tooth depth.

For example, the greater the focal length of Fresnel lens 8, the longer the lens length and the more teeth, and the more uniform the picture transition. For example, the focal length of Fresnel lens 8 is in the range from 500 mm to 1000mm. The experimental results show that a uniform display picture can be obtained in line with the observation distance of human eyes in practical applications, especially upon the focal length of Fresnel lens 8 being close to 1000 mm, for example, the focal length is in the range from 800 mm to 1000mm, and the effect is better. Reference can be made to the display effect diagram of the spliced display panel when the focal lengths of Fresnel lens 8 are 500mm and 1000mm, respectively, as shown in FIG. 7C.

Referring to FIG. 5, for example, the backlight assembly further includes a transparent soft part 01 and a light shielding part 02, the transparent soft part 01 is located at a side of the Fresnel lens 8 close to the light emitting element 3 and configured to support the Fresnel lens 8; the light shielding part 02 is located at a side of the transparent soft part 01 away from the working area, and is configured to absorb light from the side of the transparent soft part 01 away from the working area 1, so as to prevent light from exiting from the side of the soft part 01 and cause light loss, and the design is compact and regular, which is beneficial to the stability of the backlight assembly and avoids affecting the display effect of the display area. The main function of the light shielding part 02 is to prevent the light from exiting from the side of the backlight assembly, and at the same time, the light shielding part 02 plays the role of supporting and protecting the frame and protecting, strengthening the middle frame 5, protecting the display panel and its internal components, such as the middle frame 5, the flip-chip film COF, and the light emitting element 3, so as to avoid the damage of the internal components of the light shielding part caused by bumping.

For example, the material of the light shielding part 02 is metal, such as iron, aluminum, aluminum alloy, carbon steel, etc.

For example, the thickness d3 of the transparent soft part 01 in the vertical direction D2 ranges from 0.1 mm to 0.2 mm, so as to play a sufficient buffering role and prevent the thinness of the backlight assembly from being increased due to the excessive thickness.

For example, the material of the transparent soft part 01 is a transparent soft material, such as soft transparent glue or transparent foam. The transparent soft part 01 is filled between the display substrate 103 and the light-transmitting Fresnel lens 8, which plays a buffering role, protects the display substrate 103 and prevents light leakage due to extrusion.

Referring to FIGS. 2A and 5, for example, the upper surface of the opaque supporting part 72 of the frame 7 which is away from the light emitting element 3 in the vertical direction D2 perpendicular to the bottom surface 41 of the light guide plate 4 does not exceed the upper surface of the soft part 01 which is away from the light emitting element 3 in the vertical direction D2 and the upper surface of the light shielding part 02 which is away from the light emitting element 3 in the vertical direction D2 perpendicular to the bottom surface 41 of the light guide plate 4. In this way, the opaque supporting part 72 does not block the light that may be incident on the frame area 2, while achieving the light shielding, so as to further prevent the opaque supporting part 72 from blocking the light that may be incident on the frame area 2, thereby weakening the seam.

For example, the thickness H1 of the opaque supporting part 72 in the first direction D1 is within 0.3mm to play a sufficient supporting role and the thickness H1 should not be too large. For example, the transparent vertical part 71a of the frame 7 should have a thickness H2 within 0.1mm in the first direction D1. The vertical part 71a is mainly used to connect the Fresnel lens with the opaque supporting part 72 and to connect two sub-display panels spliced with each other in a spliced display panel. On the premise of ensuring that the vertical part 71a has sufficient support strength and connection strength, the smaller the H1 and H2 are, the smaller the width of the actual physical seam will be. The width of seam in the embodiment of the present disclosure refers to the width of seam S1 in the first direction D1.

For example, referring to FIG. 2A, the backlight assembly further includes an optical film 9 which may include at least one selected from the group consisting of a diffusing sheet, a prism sheet and a multilayer brightness enhancement film (DBEF). The optical film 9 is configured to improve the light exiting brightness of the backlight assembly and appropriately increase the shielding property, so that the working area 1 has a more uniform and ideal light emitting effect.

As shown in FIG. 2A, at least one embodiment of the present disclosure further provides a display panel 10, which includes a display substrate 103 and any backlight assembly provided by the embodiment of the present disclosure. The display substrate 103 is located at the side of the light guide plate 4 away from the light emitting element 3, and the light emitted from the light guide plate 4 enters the display substrate 103 and is exited from the display area of the display substrate 103.

As shown in FIG. 2A, the display panel 10 includes a display surface 10S, which includes a display area 101 and a non-display area 102 at least partially surrounding the display area 101, and the display area 101 is located in an orthographic projection of the working area 1 of the backlight assembly on the display surface 10S. The working area 1 includes a middle area 1A and an edge area surrounding the middle area 1A, and the backlight assembly is configured to enable the light emitted by the light emitting element 3 to enter the display area 101 and enter the edge area of the working area 1 and the frame area 2; an orthographic projection of the outer part 51 of the middle frame 5 on the display surface 10S is at least partially located in an orthographic projection of the edge frame 7 of the display area 101 on the display surface 10S, and located in the non-display area 102.

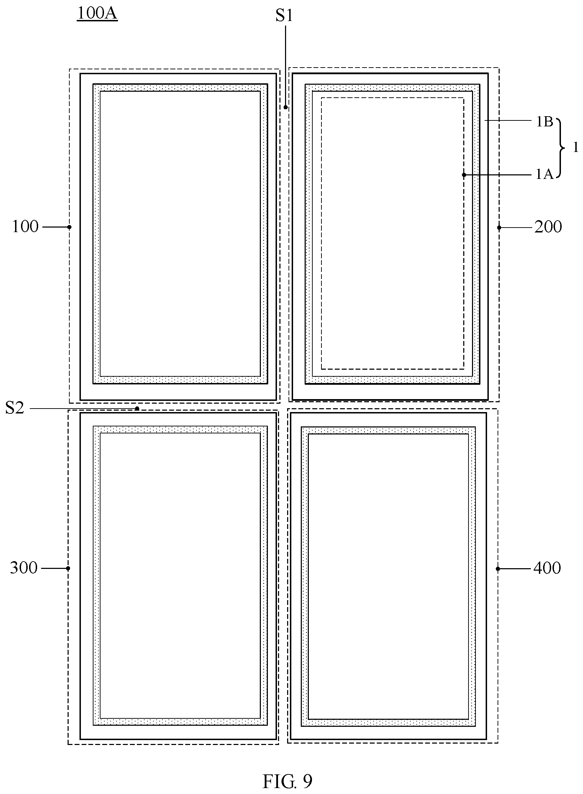

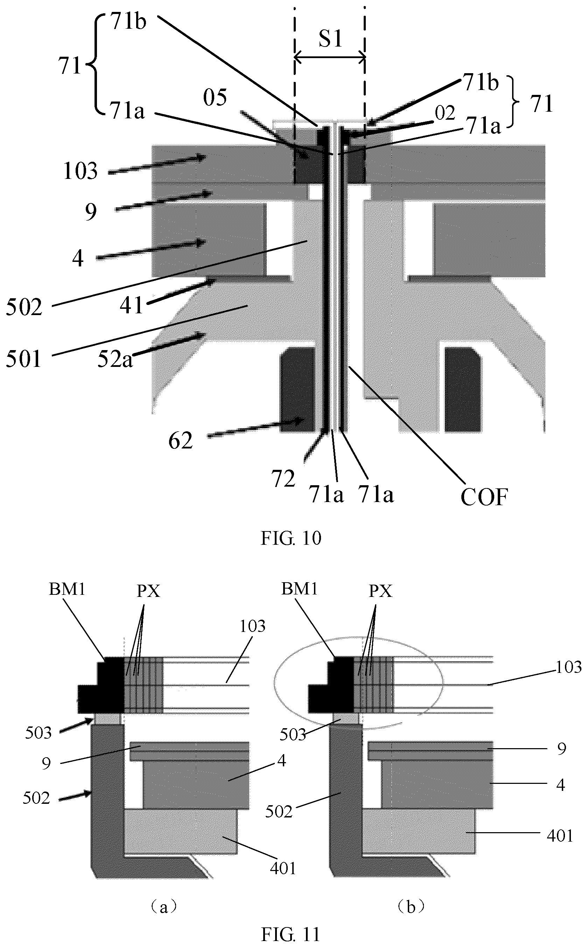

FIG. 9 is a schematic planar view of a display panel 100A provided by an embodiment of the present disclosure, and FIG. 10 is a schematic cross-sectional view of the display panel shown in FIG. 9 including a seam S1. The display panel 100A is a spliced display panel. Referring to FIG. 9, one display substrate and one backlight assembly constitute one substrate unit, that is, the display substrate 10 shown in FIG. 2A is a substrate unit (that is, the sub-display panel mentioned above), and the spliced display panel 100A shown in FIG. 9 includes a plurality of substrate units, which are spliced with each other, and two adjacent substrate units are a first substrate unit 100 and a second substrate unit 200, respectively. Referring to FIGS. 9-10, the outer side surface 70 of the frame 7 of the first substrate unit 100 and the outer side surface 70 of the frame 7 of the second substrate unit 200 are attached to each other, and no interval is provided between the outer side surface of the frame 7 of the first substrate unit 100 and the outer side surface of the frame 7 of the second substrate unit 200. Because the vertical parts 71a of the transparent parts 71 of the frame 7 are all transparent, the width of the physical seam of the spliced display panel using the display panel 10 including the backlight assembly is reduced.

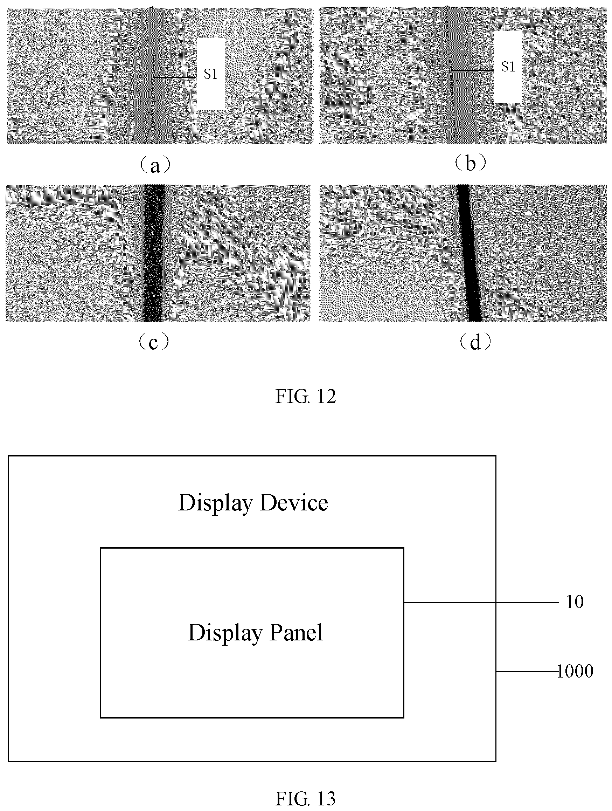

FIG. 12 is a schematic diagram for comparing the display effect of a display panel with other display panels at the seam position according to an embodiment of the present disclosure. FIG. 12 (a) shows the display effect close to the seam S1 of the spliced display panel 100A provided by the embodiment of the present disclosure from a frontal perspective, and FIG. 12 (b) shows the display effect close to the seam S1 of the spliced display panel 100A provided by the embodiment of the present disclosure from an oblique perspective; FIG. 12 (c) shows the display effect close to the seams of other spliced display panel (display panels that do not adopt the backlight assembly provided by the embodiment of the present disclosure) from a frontal perspective, and FIG. 12 (d) shows the display effect close to the seams of other spliced display panel (display panels that do not adopt the backlight assembly provided by the embodiment of the present disclosure) from an oblique perspective. According to FIG. 12, the width of the seam of the display areas corresponding to an area near the seam of the spliced display panel 100A provided by the embodiment of the present disclosure is obviously narrowed, and the brightness of the edge display area close to the seam is relatively high, so that the phenomenon that the edge brightness of the display areas on two sides of the seam is relatively dark is basically not seen, and the brightness uniformity of the whole spliced display panel is good, thus improving the display effect of the spliced display panel.

For example, in FIG. 9, the spliced display panel 100A is spliced by four sub-display panels (the first sub-display panel 100, the second sub-display panel 200, the third sub-display panel 300 and the fourth sub-display panel 400). The four substrate units form a seam S1 and a seam S2, and the seam S1 and the seam S2 are cross-shaped. However, the present disclosure does not limit the number of substrate units included in one spliced display panel 100A.

FIG. 11 is a schematic diagram of the positional relationship between the edge black matrix and the middle frame in a display panel according to an embodiment of the present disclosure. Referring to FIG. 11 (a), for example, the display substrate 103 includes a black matrix that defines a plurality of sub-pixels PX; for example, a plurality of sub-pixels PX include a red sub-pixel emitting red light, a green sub-pixel emitting green light, and a blue sub-pixel emitting blue light, and one red sub-pixel, one green sub-pixel and one blue sub-pixel constitute one pixel. Of course, the specific structures of sub-pixels and pixels are not limited to this example. For example, the black matrix includes an edge black matrix BM1 farthest from the display area 101, and an orthographic projection of the edge black matrix BM1 on a plane where the display surface 10S is located is at least partially overlapped with an orthographic projection of the second supporting part 502 of the middle frame 5 on the plane where the display surface 10S is located; the edge of the edge black matrix BM1 close to the display area 101 is aligned with the edge of the second supporting part 502 of the middle frame 5 close to the display area to prevent the center frame 5 from blocking the sub-pixel PX of the display substrate 103 at the edge of the display area.

Alternatively, referring to Fig. 11 (b), the edge of the edge black matrix BM1 close to the display area 101 is not aligned with the edge of the second supporting part 502 of the middle frame 5 close to the display area. In this application, even if the edge of the edge black matrix BM1 close to the display area 101 is not aligned with the edge of the second supporting part 502 of the middle frame 5 close to the display area, for example, the entire outer part 502 of the middle frame 5 is transparent, therefore, the problem that the outer part 502 of the middle frame 5 shields the edge sub-pixels will not occur, thus reducing the requirement on the manufacturing accuracy of the black matrix BM.

Referring to FIG. 10, for example, the entire structure constituted by the Fresnel lens 8, the transparent soft part 01 and the light shielding part is stacked at a side of the display substrate away from the light emitting element, an all the Fresnel lens 8, the transparent soft part 01 and the light shielding part extend along the edge of the display area 101 and cover the edge area of the display area 101; the display panel 10 further includes a transparent filling part 05 which is filled between the display substrate and the opaque supporting part and supports the entire structure constituted by the Fresnel lens 8, the transparent soft part 01 and the light shielding part 02.

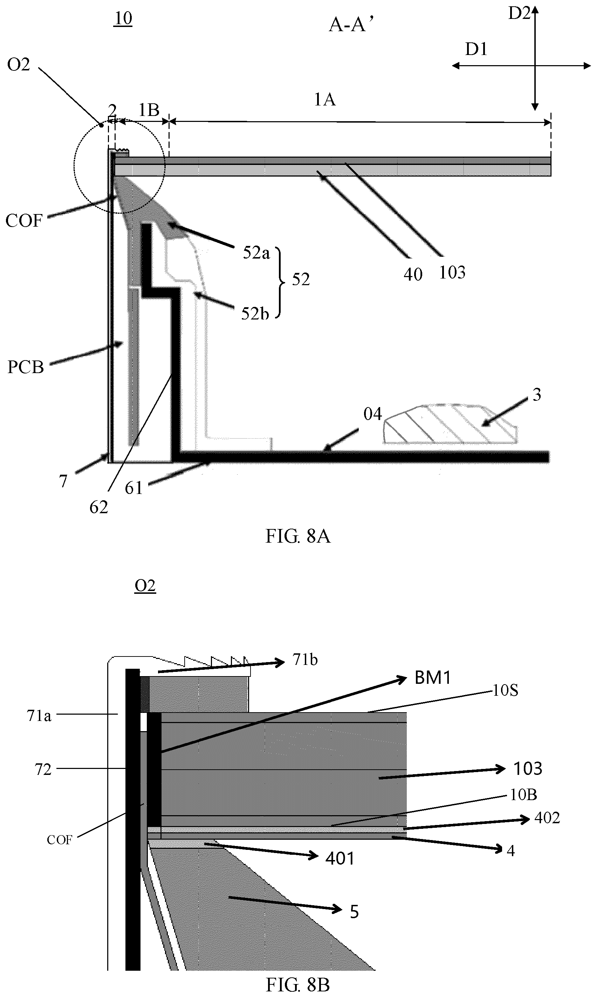

FIG. 8A is a schematic diagram of yet another display panel provided by an embodiment of the present disclosure, and the display panel includes yet another backlight assembly provided by an embodiment of the present disclosure; FIG. 8B is an enlarged schematic view of a part O2 including a middle frame, a frame and a light guide plate of the backlight assembly in FIG. 8A. In the display panel shown in FIG. 8, the light guide plate 4 covers the entire lower surface 10B of the display substrate 103 opposite to the display surface 10S.

At least one embodiment of the present disclosure provides a display device, which includes any display substrate provided by the embodiment of the present disclosure. For example, the display device may be a display panel.

Illustratively, FIG. 13 is a schematic diagram of a display device provided by an embodiment of the present disclosure. As shown in FIG. 13, that display device 1000 provide by at least one embodiment of the present disclosure includes any display panel 10 provide by the embodiment of the present disclosure.

For example, the display device 1000 is any display device that requires a backlight assembly, such as a liquid crystal display device. Of course, the display device 1000 is not limited to a liquid crystal display device. Other structures of the display device 1000, such as the driving circuit, can be designed with reference to the conventional technology in the field, and the embodiment of the present disclosure is not limited thereto.

For example, the display device is a liquid crystal display device, for example, including the above display panel and backlight, and may also be a display apparatus including other structures, etc., for example, it can be realized as mobile phones, tablet computers, monitors, notebook computers, ATM machines and other products.

What has been described above is only an exemplary implementation of the present disclosure, and is not used to limit the protection scope of the present disclosure, which is determined according to the scope defined by the claims.

## Claims

1. A backlight assembly, comprising:
a working area;
a frame area, at least partially surrounding the working area;
a light emitting element, located in the working area;
a light guide plate, located in the working area and configured to guide light emitted by the light emitting element to exit from the working area; and
a middle frame, located at a side of the light guide plate close to the light emitting element, arranged along at least a part of an edge of the light guide plate, and configured to enable a part of the light emitted by the light emitting element to enter the frame area,
wherein the middle frame comprises an outer part and an inner part, the light guide plate comprises a bottom surface facing the light emitting element, the outer part is located at a side of the light guide plate close to the frame area, and the inner part is connected with the outer part, an orthographic projection of the inner part on a plane where the bottom surface of the light guide plate is located is within the bottom surface of the guide plate; the inner part comprises an upper part close to the light guide plate, and the upper part of the inner part is transparent;
the outer part comprises an upper part and a lower part which are arranged in a vertical direction and connected with each other, orthographic projections of the upper part of the outer part and the upper part of the inner part on a plane parallel to the vertical direction are at least partially overlapped with each other, and the lower part of the outer part is located at a side of the upper part of the inner part close to the light emitting element in the vertical direction; both the upper part of the outer part and at least a part of the lower part of the outer part are transparent.

2. The backlight assembly according to claim 1, further comprising:
a back plate, comprising a bottom plate substantially parallel to the bottom surface of the light guide plate and a lateral plate intersecting the bottom plate and extending in the vertical direction perpendicular to the bottom surface of the light guide plate, wherein the light emitting element is arranged on the bottom plate;
the lower part of the outer part is located at a side of the lateral plate of the back plate close to the frame area and extends along the lateral plate of the back plate.

3. The backlight assembly according to claim 1 or 2, wherein an entirety of the outer part of the middle frame is transparent.

4. The backlight assembly according to claim 1 or 2, wherein the lower part of the outer part comprises a distal end away from the light guide plate, the distal end is an opaque white light reflective part, and other parts of the outer part except the distal end are transparent.

5. The backlight assembly according to any one of claims 1-4, wherein the working area comprises a middle area and an edge area surrounding the middle area;
the outer part is located in the edge area of the working area, or,
a part of the outer part is located in the edge area of the working area, and another part of the outer part is located in the frame area.

6. The backlight assembly according to any one of claims 1-5, further comprising:
a frame, at least partially located in the frame area, surrounding at least a part of the working area, and located at an outer side of the middle frame away from the working area, wherein
the frame comprises a transparent part and a supporting part that is opaque, and the transparent part is located at an outer side of the supporting part away from the working area and attached to the supporting part.

7. The backlight assembly according to claim 6, wherein the transparent part of the frame comprises:
a vertical part, located in the frame area, surrounding the working area and extending in the vertical direction perpendicular to the bottom surface of the light guide plate, wherein the vertical part of the frame comprises an outer side surface which is away from the working area, and the outer side surface is a flat surface and perpendicular to the bottom surface of the light guide plate.

8. The backlight assembly according to claim 7, wherein the vertical part of the frame comprises an upper end in the vertical direction, and the transparent part of the frame further comprises:
a horizontal part, connected with an upper end of the vertical part of the frame and extending in a horizontal direction parallel to the bottom surface of the light guide plate, wherein at least a part of the horizontal part is located in the frame area and at a side of the light guide plate away from the light emitting element in the vertical direction, and an included angle between a bottom surface of the horizontal part of the frame close to the light guide plate and the outer side surface of the vertical part of the frame is a right angle.

9. The backlight assembly according to any one of claims 1-8, wherein a material of the part of the middle frame that is transparent comprises a base material and a diffusing agent dispersed in the base material;
the base material is an organic material, the organic material comprises at least one of PC and PMMA, and the diffusing agent comprises at least one of a silicon dioxide diffusing agent and a silicone diffusing agent.

10. The backlight assembly according to claim 9, wherein a doping concentration of the silicon dioxide diffusing agent in the base material is 0.6%, or a doping concentration of the silicone diffusing agent in the base material is 1%-2%;
a haze of the part of the middle frame that is transparent is 50%-65%.

11. The backlight assembly according to any one of claims 2-10, wherein the inner part further comprises a lower part which is close to the light emitting element and connected with the upper part of the inner part, the lower part of the inner part is opaque, and a surface of the lower part of the inner part is a white light reflection layer, and a part of the light emitted by the light emitting element is incident on the white light reflection layer, and the white light reflection layer is configured to reflect the light emitted by the light emitting element.

12. The backlight assembly according to claim 11, wherein the upper part of the inner part comprises a first inclined part, and a plane parallel to the bottom surface of the light guide plate is a horizontal plane, and an extension direction of the first inclined part intersects with the horizontal plane;
an included angle between the extension direction of the first inclined part and the horizontal plane is a first included angle, and a range of the first included angle is 35 degrees ~ 65 degrees.

13. The backlight assembly according to claim 12, wherein a lower end of the inner part of the middle frame is connected with the bottom plate of the back plate to fix the middle frame on the back plate, a direction from the frame area to the working area is a first direction, and a first distance C between the light emitting element that is closest to the middle frame and the lower end of the inner part of the middle frame in the first direction is 25 mm to 50 mm.

14. The backlight assembly according to claim 13, wherein the first distance decreases as the first included angle decreases.

15. The backlight assembly according to claim 12, wherein the lower part of the inner part comprises a second inclined part, and the extension direction of the second inclined part comprises a second included angle with the horizontal plane, and the second included angle ranges from 95 degrees to 100 degrees.

16. The backlight assembly according to claim 12, wherein an included angle between the second inclined part and the horizontal plane and the included angle between the first inclined part and the horizontal plane are the same, and an entirety constituted by the second inclined part and the first inclined part which are in direct connection with each other comprises a flat inclined surface intersecting the horizontal plane.

17. The backlight assembly according to any one of claims 1-16, wherein the part of the middle frame that is transparent comprises:
a first supporting part, comprising a first supporting surface, wherein the first supporting surface is configured to support the light guide plate, and a first part of the first supporting surface close to the working area overlaps with the light guide plate in the vertical direction perpendicular to the bottom surface of the light guide plate to support the light guide plate; and
a second supporting part, connected with the first supporting part, located at a side of the first supporting part away from the working area, disposed at an interval with the light guide plate, and comprising a second supporting surface, wherein the second supporting part is configured to support a display substrate with pixels, and the interval exposes a second part of the first supporting surface away from the working area.

18. The backlight assembly according to claim 17, wherein a proportion of the first part of the first supporting surface to the first supporting surface is in a range of 35%-65%.

19. The backlight assembly according to claim 18, wherein a direction from the frame area to the working area is a first direction, a width of the first support surface in the first direction ranges from 2.0 mm to 3 mm, and a width of the interval in the first direction ranges from 0.8 mm to 1.3 mm.

20. The backlight assembly according to claim 17, further comprising:
a light guide plate fixing glue, located between the first supporting surface and the light guide plate to bond the first supporting surface and the light guide plate, wherein a direction from the frame area to the working area is a first direction, and a width of the light guide plate fixing glue in the first direction is less than or equal to a width of the first supporting surface in the first direction.

21. The backlight assembly according to any one of claims 6-20, wherein the working area comprises a middle area and an edge area surrounding the middle area;
the backlight assembly further comprises:
a Fresnel lens, located in the frame area and the edge area of the working area, and is located at a side of the light guide plate away from the light emitting element, wherein the Fresnel lens and the frame are made of a same material and constitute a continuous and integral structure.

22. The backlight assembly according to claim 21, wherein, in a case that the transparent part of the frame comprises a horizontal part, the horizontal part of the frame is connected with an upper end of the vertical part of the frame, extends in a horizontal direction parallel to the bottom surface of the light guide plate, and is located at a side of the light guide plate away from the light emitting element in the vertical direction, and an included angle between the bottom surface of the horizontal part of the frame close to the light guide plate and an outer side surface of the vertical part of the frame is a right angle,
at least a part of the horizontal part of the frame is configured as the Fresnel lens.

23. The backlight assembly according to claim 22, wherein the horizontal part of the frame comprises a non-microstructure part away from the working area and a microstructure part close to the working area, and the microstructure part is configured as a Fresnel lens and comprises a plurality of serrations;
a direction from the frame area to the working area is a first direction, a length of the microstructure part in the first direction ranges from 5 mm to 10 mm, and a length of the non-microstructure part in the first direction is less than or equal to 1 mm.

24. The backlight assembly according to claim 23, wherein the plurality of serrations have equal depths in the vertical direction perpendicular to the bottom surface of the light guide plate, and the depths of the plurality of serrations are all less than 0.5 mm.

25. The backlight assembly according to claim 23 or 24, wherein a tooth pitch of the plurality of serrations of the Fresnel lens gradually increases in a direction from the working area to the frame area.

26. The backlight assembly according to claim 25, wherein a minimum tooth pitch of the plurality of serrations of the Fresnel lens ranges from 0.06 mm to 0.2 mm, and the tooth pitch of the plurality of serrations ranges from 0.05 mm to 1 mm.

27. The backlight assembly according to any one of claims 21-26, further comprising:
a transparent soft part, located at a side of the Fresnel lens close to the light emitting element and configured to support the Fresnel lens; and
a light shielding part, located at a side of the transparent soft part away from the working area and configured to absorb light from a side of the transparent soft part away from the working area.

28. The backlight assembly according to claim 27, wherein an upper surface of the supporting part, that is opaque, of the frame away from the light emitting element in the vertical direction perpendicular to the bottom surface of the light guide plate is flush with an upper surface of the transparent soft part away from the light emitting element in the vertical direction perpendicular to the bottom surface of the light guide plate and flush with an upper surface of the light shielding part away from the light emitting element in the vertical direction perpendicular to the bottom surface of the light guide plate.

29. A display panel, comprising a display substrate and the backlight assembly according to any one of claims 1-28, wherein the display substrate is located at a side of the light guide plate away from the light emitting element.

30. The display panel according to claim 29, comprising a display surface, wherein the display surface comprises a display area and a non-display area at least partially surrounding the display area, and the display area is located in an orthographic projection of the working area of the backlight assembly on the display surface;
the working area comprises a middle area and an edge area surrounding the middle area, and the backlight assembly is configured to enable light emitted by the light emitting element to enter the display area and enter the edge area and the frame area of the working area;
an orthographic projection of the outer part of the middle frame on the display surface is at least partially located in the edge area of the display area;
in a case that the backlight assembly comprises a frame, which is at least partially located in the frame area, surrounds at least a part of the working area, and is located at an outer side of the middle frame away from the working area, the frame comprises a transparent part and a supporting part that is opaque, and the transparent part is located at an outer side of the supporting part away from the working area and attached to the supporting part, an orthographic projection of the frame on the display surface is located in the non-display area.

31. The display panel according to claim 29 or 30, wherein one display substrate and one backlight assembly constitute one substrate unit, and the display panel comprises a plurality of substrate units which are spliced with each other, and two adjacent ones of the plurality of display substrates are respectively a first substrate unit and a second substrate unit; in a case that the transparent part of the frame comprises a vertical part, the vertical part of the frame is located in the frame area, surrounds the working area and extends along the vertical direction perpendicular to the bottom surface of the light guide plate, the vertical part of the frame comprises an outer side surface away from the working area, and the outer side surface is a flat surface and perpendicular to the bottom surface of the light guide plate,
the outer side surface of the frame of the first substrate unit and the outer side surface of the frame of the second substrate unit are attached to each other, and no gap is between the outer side surface of the frame of the first substrate unit and the outer side surface of the frame of the second substrate unit.

32. The display panel according to any one of claims 29-31, wherein the display substrate comprises a black matrix defining a plurality of sub-pixels;
the black matrix comprises an edge black matrix farthest from the display area, and an orthographic projection of the edge black matrix on a plane where the display surface is located and an orthographic projection of the second supporting part of the middle frame on the plane where the display surface is located are at least partially overlapped with each other;
an edge of the edge black matrix close to the display area is aligned with an edge of the second supporting part of the middle frame close to the display area, or an edge of the edge black matrix close to the display area is not aligned with an edge of the second supporting part of the middle frame close to the display area.

33. The display panel according to any one of claims 30-32, wherein an entirety constituted by the Fresnel lens, the transparent soft part and the light shielding part is stacked at a side of the display substrate away from the light emitting element, and all the Fresnel lens, the transparent soft part and the light shielding part extend along an edge of the display area and cover the edge area of the display area;
the display panel also comprises a transparent filling part, the transparent filling part is filled between the display substrate and the supporting part that is opaque, and supports the entirety constituted by the Fresnel lens, the transparent soft part and the light shielding part.

34. The display panel according to any one of claims 30-32, wherein the light guide plate covers an entirety of a lower surface of the display substrate opposite to the display surface.

35. A display device, comprising the display panel according to any one of claims 29-34.
